# FASCICULE DE BREVET EUROPEEN

(11) **EP 2 301 813 B1**
(45) Date de publication et mention de la délivrance du brevet: **09.05.2012**
(21) Numéro de dépôt: 10290497.6
(22) Date de dépôt: 21.09.2010
(51) Int. Cl.: B60R 21/02, F41H 7/02

(54) **Dispositif de protection de l'équipage d'un véhicule contre la projection d'équipements**
Vorrichtung zum Schutz einer Fahrzeugbesatzung gegen geschleuderte Ausrüstungsgegenstände
Device for protecting a vehicle crew against projection of equipment

(30) Priorité: 25.09.2009 FR 0904604
(43) Date de publication de la demande: 30.03.2011
(73) Titulaire: NEXTER Systems, 42328 Roanne Cedex (FR)
(72) Inventeur: Sagory, Bernard, 18023 Bourges Cedex (FR); Barreau, Michel, 18023 Bourges Cedex (FR); Mallat, Didier, 18023 Bourges Cedex (FR); Leveque, Stéphane, 18023 Bourges Cedex (FR)
(74) Mandataire: Célanie, Christian

(56) Documents cités:
- EP-B1- 0 515 481
- EP-B1- 1 153 795
- DE-A1- 4 128 527

## Description

Le domaine technique de l'invention est celui des dispositifs de protection de l'équipage d'un véhicule contre la projection d'équipements disposés dans des espaces de rangement.

Il est connu dans le domaine automobile de prévoir des filets de protection empêchant, par exemple en cas de freinage, la projection au travers de l'habitacle d'objets situés à l'arrière du véhicule.

Le brevet EP515981B décrit un tel filet de protection qui est logé dans un moyen enrouleur fixé à l'arrière des sièges. Le filet se fixe de façon démontable au plafond du véhicule par un moyen d'accrochage.

Un tel dispositif comportant un filet souple à mailles en matière plastique est bien adapté à la plupart des véhicules civils dans lesquels les charges à retenir sont de masse réduite et la largeur fermée par le filet est également réduite (inférieure à 2 mètres).

Dans le domaine des véhicules blindés d'infanterie, des espaces de rangements sont prévus dans l'habitacle, généralement en arrière des sièges de l'équipage, dans les déports de caisse situés au-dessus des roues (ou des chenilles).

Ces rangements ont pour longueur la longueur même de l'habitacle soit au moins 3 mètres et une hauteur de l'ordre du mètre. Les équipements logés dans les déports sont très variés (armes pour fantassins, équipements de combat, réserves d'eau et de combustible...). Ces équipements sont en principe fixés de façon individuelle à la caisse du véhicule, mais ceci n'exclut pas le risque de voir un équipement non fixé ou bien attaché de façon imparfaite.

Or on a pu constater que lors de la détonation d'une mine à effet de souffle en dessous ou a proximité du véhicule, les chocs reçus par le véhicule étaient très importants et que les équipements qui n'étaient pas solidement fixés pouvaient se trouver projetés violemment au travers de l'habitacle.

Le filet de protection décrit par EP515481B a une résistance insuffisante. Par ailleurs, sa mise en oeuvre dans un véhicule blindé d'infanterie conduirait à réaliser un filet de longueur importante qui aurait une rigidité insuffisante pour assurer le maintien en toute sécurité d'équipements lourds et violemment projetés.

L'invention a pour but de proposer un dispositif de protection qui assure la fermeture d'un espace de rangement de dimensions importantes tout en étant d'encombrement réduit et facilement détachable.

Ainsi l'invention a pour objet un dispositif de protection de l'équipage d'un véhicule, en particulier d'un véhicule militaire, contre la projection d'équipements disposés dans des espaces de rangement d'un véhicule, dispositif comprenant au moins un écran de maintien s'étendant sur sensiblement toute la longueur et la hauteur de l'espace de rangement, écran fixé au niveau de points de fixation bas solidaires de la caisse du véhicule et accrochable également d'une façon démontable au niveau de points de fixation hauts solidaires de la caisse du véhicule, dispositif caractérisé en ce qu'il est constitué d'au moins deux panneaux sensiblement rectangulaires ayant pour longueur sensiblement celle de l'espace de rangement, panneaux s'empilant les uns sur les autres lorsque le dispositif est en position repliée et se positionnant les uns dans le prolongement des autres de façon à fermer l'espace de rangement lorsque le dispositif est en position d'obturation.

Les panneaux seront liés les uns aux autres par un moyen de liaison souple autorisant le repli des panneaux.

D'une façon préférée, les panneaux seront fixés à la caisse du véhicule par des sangles équipées de moyens d'accrochage et de tension de ces sangles.

Selon un mode particulier de réalisation, le moyen de liaison souple comprendra une enveloppe de tissu entourant les panneaux, enveloppe sur laquelle seront fixées les sangles.

Les panneaux pourront être réalisés en un alliage d'aluminium.

L'invention vise également une application d'un tel dispositif de protection à la fermeture d'espaces de rangement latéraux situés derrière les sièges d'un véhicule blindé d'infanterie.

L'invention sera mieux comprise à la lecture de la description qui va suivre d'un mode particulier de réalisation, description faite en référence aux dessins annexés et dans lesquels :
- la figure 1 montre de façon schématique et en perspective l'intérieur d'un véhicule blindé d'infanterie équipé d'un dispositif de protection selon l'invention, dispositif représenté en position déployée,
- la figure 2 est une vue analogue à la précédente mais montrant le dispositif en position repliée,
- la figure 3 est une vue latérale du dispositif replié.

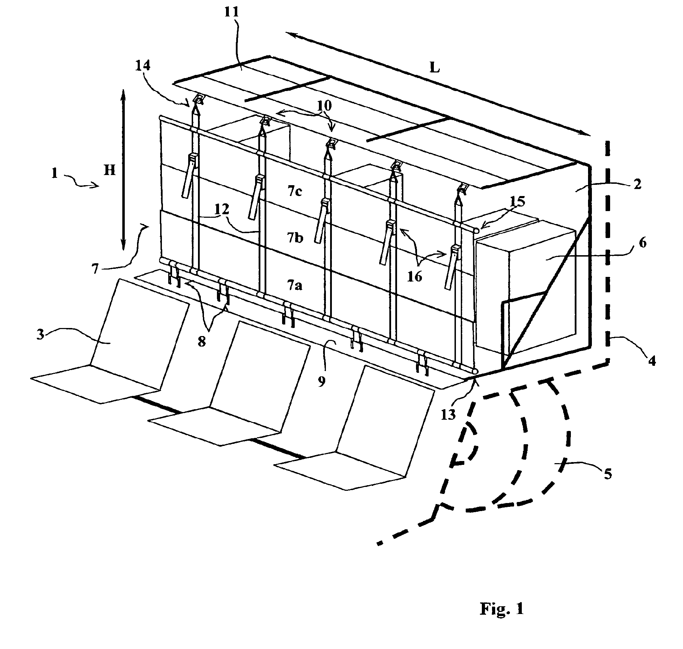

En se reportant à la figure 1 un dispositif de protection 1 selon l'invention est destiné à venir fermer un espace de rangement 2 qui est disposé latéralement le long d'un véhicule blindé d'infanterie derrière une rangée de sièges 3.

L'espace de rangement est ici logé dans un déport latéral de la caisse 4 du véhicule, déport couvrant les roues 5 du véhicule (caisse et roues sont représentées très schématiquement pour situer ces éléments par rapport à l'espace de rangement 2).

L'espace de rangement est destiné à recevoir divers équipements 6 schématisés ici par des parallélépipèdes. Les équipements sont eux-mêmes rendus solidaires de la caisse 4 par l'intermédiaire de sangles 2 (non représentées).

L'espace de rangement a une longueur L importante (qui dépasse généralement 3 mètres). La hauteur H de l'espace de rangement est de l'ordre du mètre.

Conformément à l'invention, le dispositif de maintien comprend un écran de maintien 7 qui s'étend sur sensiblement toute la longueur L et la hauteur H de l'espace de rangement 2.

Cet écran 7 est fixé à la caisse 4 du véhicule par des points de fixation bas 8 qui sont ici constitués par des tiges ou cavaliers métalliques fixés à une plaque de tôle 9 solidaire de la caisse 4.

En position d'obturation l'écran est par ailleurs accrochable à la caisse (de façon démontable) au niveau de points de fixation hauts 10 qui sont des ouvertures solidaires du plafond 11 de l'espace 2.

Conformément à une autre caractéristique de l'invention, l'écran 7 est formé de plusieurs panneaux (ici trois panneaux 7a, 7b et 7c). Ces panneaux sont réalisés en un matériau qui est relativement léger mais confère une certaine rigidité à l'écran 7 déployé. On réalisera par exemple les panneaux 7 sous la forme de plaques en alliage d'aluminium de 2 millimètres d'épaisseur. Les panneaux 7a, 7b et 7c sont rectangulaires et ont pour longueur sensiblement celle (L) de l'espace de rangement 2.

En position d'obturation, les panneaux 7a, 7b et 7c se positionnent les uns dans le prolongement des autres de façon à fermer l'espace de rangement 2. Les panneaux pourront éventuellement se recouvrir légèrement en position d'obturation.

Les panneaux sont rendus solidaires les uns des autres par l'intermédiaire d'une enveloppe en tissu (non représentée sur les figures), enveloppe qui est équipée de sangles verticales 12 (ici cinq sangles régulièrement réparties sur la longueur des panneaux).

L'enveloppe de tissu pourra être constituée par deux parties cousues l'une à l'autre et délimitant des poches dans lesquelles sont glissés les panneaux.

Alternativement, les sangles pourront être noyées dans la masse des panneaux ou bien chaque panneau pourra être maintenu entre deux sangles qui seront fixées l'une à l'autre entre chaque panneau et au niveau des points de fixation haut 10 et bas 8.

Suivant le mode de réalisation qui est représenté sur les différentes figures, le panneau inférieur 7a est solidaire d'une tige 13 métallique qui est elle-même attachée aux points de fixation bas 8, par exemple par des goussets en tissu. Les sangles 12 sont également fixées par gousset à la tige métallique 13.

Les extrémités supérieures des sangles 12 portent des crochets 14 qui sont destinés à coopérer avec les ouvertures 10 solidaires du plafond 11. Par ailleurs une deuxième tige métallique 15 est solidaire du panneau supérieur 7c ainsi que des différentes sangles 12. Chaque sangle 12 est par ailleurs équipée d'un moyen de mise en tension 16 qui est par exemple constitué par une boucle de serrage classique (ou une grenouillère).

Il est donc aisé de détacher l'écran 7 en desserrant tous les moyens de mise en tension 16 puis en détachant les différents crochets 14.

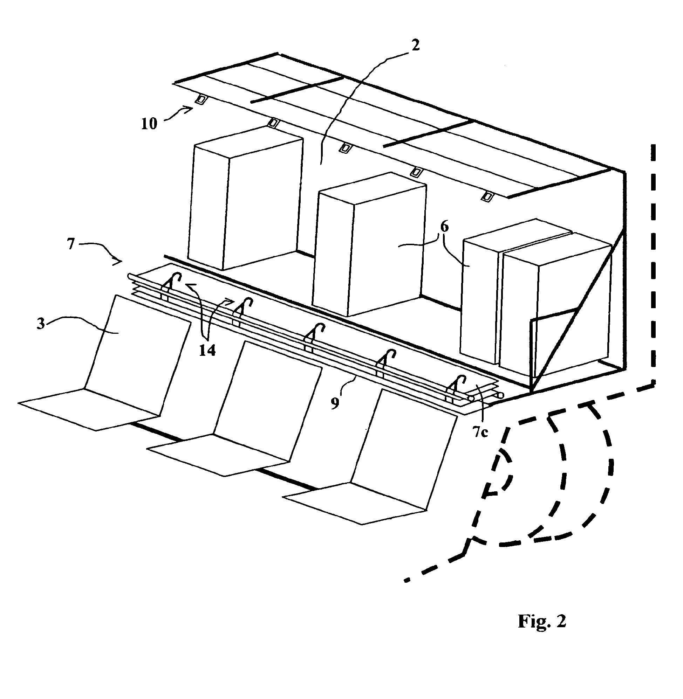

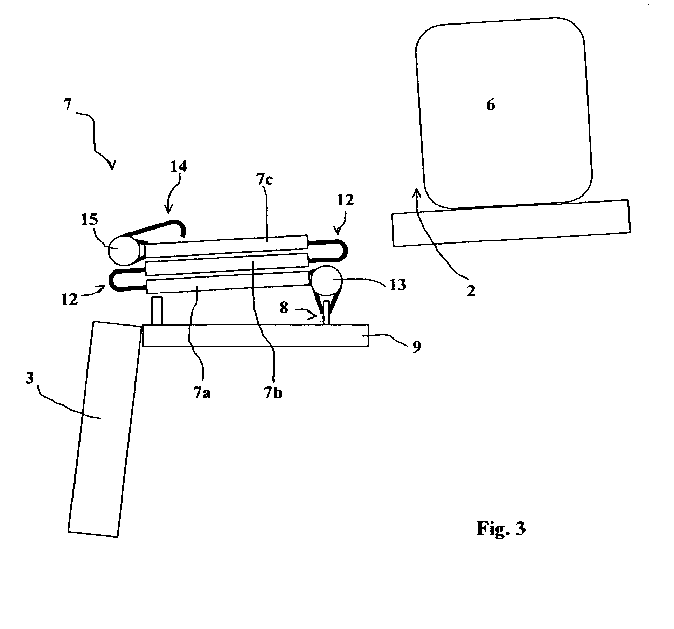

Une fois détaché, le dispositif adopte la configuration représentée aux figures 2 et 3. Les différents panneaux 7a, 7b et 7c de l'écran 7 s'empilent les uns sur les autres et sur la tôle 9. La souplesse de l'enveloppe de tissu et des sangles 12 autorise un tel repli. L'écran 7 occupe alors un espace très réduit et ne gêne pas l'accès à l'espace de rangement 2.

On voit que le dispositif de protection selon l'invention permet d'assurer une forte capacité de maintien des équipements grâce à la rigidité des panneaux 7a,7b,7c maintenus par des sangles 12 mises en tension. Ce dispositif est par ailleurs léger et il est facile et rapide à détacher et occupe un espace minime en position repliée.

En fonction des dimensions de l'espace de rangement 2, il sera possible de prévoir un nombre plus ou moins important de panneaux pour réaliser l'écran 7. Le matériau des panneaux sera choisi en fonction des performances mécaniques recherchées pour le maintien. Le nombre des sangles 12 pourra enfin être plus ou moins important en fonction des dimensions de l'espace et de la rigidité souhaitée, un nombre de sangles plus important augmentant la rigidité de l'écran 7.

## Revendications

1. Dispositif de protection (1) de l'équipage d'un véhicule, en particulier d'un véhicule militaire, contre la projection d'équipements (6) disposés dans des espaces (2) de rangement d'un véhicule, dispositif comprenant au moins un écran (7) de maintien s'étendant sur sensiblement toute la longueur (L) et la hauteur (H) de l'espace de rangement (2), écran fixé au niveau de points de fixation bas (8) solidaires de la caisse (4) du véhicule et accrochable également d'une façon démontable au niveau de points de fixation hauts (10) solidaires de la caisse du véhicule, dispositif **caractérisé en ce qu'**il est constitué d'au moins deux panneaux (7a,7b,7c) sensiblement rectangulaires ayant pour longueur sensiblement celle de l'espace de rangement (2), panneaux s'empilant les uns sur les autres lorsque le dispositif est en position repliée et se positionnant les uns dans le prolongement des autres de façon à fermer l'espace de rangement lorsque le dispositif est en position d'obturation.

2. Dispositif de protection selon la revendication 1, **caractérisé en ce que** les panneaux (7a,7b,7c) sont liés les uns aux autres par un moyen de liaison souple autorisant le repli des panneaux.

3. Dispositif de protection selon la revendication 2, **caractérisé en ce que** les panneaux (7a,7b,7c) sont fixés à la caisse du véhicule par des sangles (12) équipées de moyens d'accrochage (14) et de tension (16) de ces sangles.

4. Dispositif de protection selon la revendication 3, **caractérisé en ce que** le moyen de liaison souple comprend une enveloppe de tissu entourant les panneaux (7a, 7b, 7c), enveloppe sur laquelle sont fixées les sangles (12).

5. Dispositif de protection selon une des revendications 1 à 4, **caractérisé en ce que** les panneaux (7a,7b,7c) sont réalisés en un alliage d'aluminium.

6. Application du dispositif de protection selon une des revendications 1 à 5, à la fermeture d'espaces de rangement latéraux (2) situés derrière les sièges (3) d'un véhicule blindé d'infanterie.

## Claims

1. A protection device (1) for the crew of a vehicle, in particular a military vehicle, against the projection of equipment (6) stored in the vehicle's stowage spaces (2), device comprising at least one retention screen (7) extending substantially over the full length (L) and height (H) of the stowage space (2), screen attached by lower attachment points (8) integral with the vehicle body (4) and also able to be hooked removably on upper attachment points (10) integral with the vehicle body, device wherein it is constituted by at least two substantially rectangular panels (7a, 7b, 7c) substantially of the same length as the stowage space (2), such panels being stacked upon one another when the device is in its folded position and being positioned in the prolongation of one another so as to close the stowage space when the device is in the closed position.

2. A protection device according to Claim 1, wherein the panels (7a, 7b, 7c) are linked together by flexible linking means enabling them to be folded.

3. A protection device according to Claim 2, wherein the panels (7a, 7b, 7c) are attached to the vehicle body by straps (12) equipped with hooking (14) and tensioning (16) means for these straps.

4. A protection device according to Claim 3, wherein the flexible linking means comprise an envelope of fabric material surrounding the panels (7a, 7b, 7c), envelope onto which the straps (12) are fastened.

5. A protection device according to one of Claims 1 to 4, wherein the panels (7a, 7b, 7c) are made of an aluminium alloy.

6. An application of a protection device according to one of Claims 1 to 5 to the closing of lateral stowage spaces (2) located behind the seats (3) of an armoured infantry vehicle.

## Patentansprüche

1. Vorrichtung zum Schutz (1) der Ausrüstung eines Fahrzeugs, insbesondere eines militärischen Fahrzeugs, gegen das Herausschleudern von Ausrüstungsgegenständen (6), die in Stauräumen (2) eines Fahrzeugs angeordnet sind, wobei die Vorrichtung wenigstens einen Halteschirm (7) aufweist, der sich im Wesentlichen über die gesamte Länge (L) und Höhe (H) des Stauraums (2) erstreckt, wobei der Schirm im Bereich von unteren Befestigungspunkten (8), die fest mit der Karosserie (4) des Fahrzeugs verbunden sind, befestigt und im Bereich von oberen Befestigungspunkten (10), die fest mit der Karosserie des Fahrzeugs verbunden sind, ebenfalls abnehmbar einhängbar ist, wobei die Vorrichtung **dadurch gekennzeichnet, *dass*** sie wenigstens zwei im Wesentlichen rechteckige Platten (7a, 7b, 7c) aufweist, deren Länge im Wesentlichen diejenige des Stauraums (2) ist, wobei sich die Platten aufeinander stapeln, wenn die Vorrichtung sich in gefalteter Position befindet, und sich in Verlängerung derartig aneinander anordnen, dass der Stauraum geschlossen wird, wenn sich die Vorrichtung in Verschlussposition befindet.

2. Schutzvorrichtung nach Anspruch 1, **dadurch gekennzeichnet, dass** die Platten (7a, 7b, 7c) durch ein flexibles Verbindungsmittel miteinander verbunden sind, welches das Falten der Platten ermöglicht.

3. Schutzvorrichtung nach Anspruch 2, **dadurch gekennzeichnet, dass** die Platten (7a, 7b, 7c) an der Karosserie des Fahrzeugs mit Bändern (12) befestigt sind, welche mit Mitteln zum Einhaken (14) und zum Spannen (16) dieser Bänder ausgerüstet sind.

4. Schutzvorrichtung nach Anspruch 3, **dadurch gekennzeichnet, dass** das flexible Verbindungsmittel eine Gewebehülle umfasst, welche die Platten (7a, 7b, 7c) umgibt, wobei an der Hülle die Bänder (12) befestigt sind.

5. Schutzvorrichtung nach einem der Ansprüche 1 bis 4, **dadurch gekennzeichnet, dass** die Platten (7a, 7b, 7c) aus einer Aluminiumlegierung hergestellt sind.

6. Verwendung der Schutzvorrichtung nach einem der Ansprüche 1 bis 5 zum Schließen von seitlichen Stauräumen (2), die hinter den Sitzen (3) eines gepanzerten Infantriefahrzeugs angeordnet sind.
